# FASCICULE DE BREVET EUROPEEN

(11) **EP 2 981 450 B1**
(45) Date de publication et mention de la délivrance du brevet: **07.06.2017**
(21) Numéro de dépôt: 14715284.7
(22) Date de dépôt: 03.04.2014
(51) Int. Cl.: B62D 25/20, B62D 29/04, B60K 13/06

(54) **PLANCHER COMPOSITE ET VÉHICULE AUTOMOBILE COMPORTANT UN TEL PLANCHER**
VERBUNDBODEN UND KRAFTFAHRZEUG MIT SOLCH EINEM BODEN
COMPOSITE FLOOR AND MOTOR VEHICLE COMPRISING SUCH A FLOOR

(30) Priorité: 05.04.2013 FR 1353092
(43) Date de publication de la demande: 10.02.2016
(73) Titulaire: Automotive Exteriors Europe, 69007 Lyon (FR)
(72) Inventeur: DUBOIS, Séverine, 92500 Rueil Malmaison (FR); GUYON, Cyrille, 25600 Nommay (FR)
(74) Mandataire: Remy, Vincent Noel Paul
(86) Numéro de dépôt international: PCT/EP2014/056720
(87) Numéro de publication internationale: WO 2014/161948

(56) Documents cités:
- DE-A1-102009 008 799
- US-A1- 2010 195 959
- US-A1- 2012 103 714

## Description

L'invention concerne en général les planchers de véhicule automobile.

Plus précisément, l'invention concerne selon un premier aspect un plancher de véhicule automobile, du type comprenant :
- un plancher inférieur en un matériau composite ; et
- un plancher supérieur en un matériau composite, s'étendant en regard d'au moins une partie du plancher inférieur, les planchers inférieur et supérieur étant liés l'un à l'autre.
Le document US 2010/0195959 A1 décrit un tel plancher.

On connait des planchers de ce type, par exemple par FR 2 912 108. De tels planchers sont légers, mais ne sont pas entièrement satisfaisants du point de vue de l'optimisation de l'espace lorsque des éléments fonctionnels sont intégrés entre les planchers inférieur et supérieur. En outre, les planchers de ce type ne présentent pas une insonorisation satisfaisante.

Dans ce contexte, l'invention vise à proposer un plancher pour véhicule automobile permettant l'intégration optimisée d'éléments fonctionnels et présentant une insonorisation qui soit améliorée et qui atténue en particulier les bruits liés à la ligne d'échappement du véhicule.

A cette fin, l'invention porte sur un plancher du type précité, caractérisé en ce que le plancher comprend au moins une cavité délimitée au moins en partie par le plancher inférieur ou supérieur et communiquant avec la ligne d'échappement du véhicule automobile.

Avantageusement, le plancher comprend une ou plusieurs cavités délimitée(s) par le plancher inférieur et le plancher supérieur. Cette ou ces cavités peuvent favorablement être utilisées pour former par exemple un volume d'échappement. L'espace est ainsi utilisé de manière optimale, et l'insonorisation est améliorée. Cette ou ces cavités peuvent favorablement être utilisées pour y intégrer un système d'amortissement acoustique des bruits d'échappement, tel que par exemple un système de Helmholtz dénommé ici résonateur. L'intégration d'une telle cavité formant résonateur au plancher du véhicule permet d'atténuer de manière très sensible les bruits liés à la ligne d'échappement, et ce sans augmenter l'encombrement du plancher.

Le plancher supérieur est typiquement tourné vers l'intérieur de l'habitacle du véhicule. Au contraire, le plancher inférieur est de façon classique tourné vers la surface du roulement du véhicule.

Le matériau composite formant le plancher supérieur comprend des fibres longues. En variante, il comprend des fibres courtes. Les fibres sont par exemple des fibres de verre et/ou des fibres de carbone et/ou des fibres d'aramide et/ou des fibres naturelles. Ces fibres sont noyées dans une résine thermoplastique et/ou thermodure et /ou vitrimère, par exemple du polyamide, du polypropylène, du polyester ou de l'époxy.

Le matériau composite du plancher supérieur présente une épaisseur comprise entre 1 mm et 6 mm et de préférence égale à 2 mm.

Le matériau composite du plancher inférieur est par exemple identique au matériau composite du plancher supérieur. En variante, il est différent. Il comporte lui aussi des fibres longues ou courtes, telles que par exemple des fibres de verre et/ou des fibres de carbone et/ou des fibres d'aramide et/ou des fibre naturelles. Ces fibres sont noyées dans une résine thermoplastique et/ou thermodure et/ou vitrimère, par exemple du polyamide, du polypropylène, du polyester ou de l'époxy. Le matériau composite du plancher inférieur présente une épaisseur comprise entre 1 mm et 6 mm, et de préférence égale à 2 mm.

Le plancher supérieur s'étend en regard d'au moins une partie du plancher inférieur. Par exemple, il s'étend en regard d'au moins 60% de la surface du plancher inférieur.

Le plancher supérieur et le plancher inférieur sont liés l'un à l'autre, soit directement, soit par l'intermédiaire d'une pièce de liaison rapportée, par exemple en matériau composite. Ils sont collés, soudés ou assemblés mécaniquement l'un à l'autre par un ou plusieurs organes de fixation, par exemple un ou plusieurs rivets.

Dans une première variante de réalisation, la cavité est délimitée par le plancher inférieur et le plancher supérieur, c'est-à-dire que toutes les parois délimitant la cavité appartiennent aux planchers inférieur et supérieur.

Dans cette variante, la cavité permet de diminuer sensiblement les bruits liés à la ligne d'échappement sans toutefois augmenter l'encombrement du plancher du véhicule. En outre, elle permet d'éviter l'encombrement du plancher. De plus, elle ne nécessite pas de matière supplémentaire pour sa fabrication et favorise ainsi l'allègement du véhicule.

Selon une seconde variante de réalisation, le plancher comprend une coque, le plancher inférieur comprenant une face inférieure et une face supérieure, la face supérieure s'étendant en regard du plancher supérieur, la coque étant fixée sur la face inférieure, la cavité étant délimitée par le plancher inférieur et par la coque. La coque est par exemple fixée au plancher inférieur par des organes de fixation mécaniques amovibles, tels que des vis. Dans cette variante, la cavité est aisément démontable, et peut être ainsi facilement réparée ou échangée lorsqu'elle est par exemple endommagée.

Dans cette seconde variante, la coque est en un métal. Le métal de la coque est par exemple un acier ou un aluminium. Le métal de la coque présente une épaisseur comprise entre 0,5 mm et 3 mm et de préférence égale à 1,5 mm.

En variante, la coque est en un plastique présentant des caractéristiques de tenue à la température adaptées à une ligne d'échappement.

En variante, la coque est en un matériau composite. Le matériau composite de la coque est par exemple identique au matériau composite du plancher inférieur et/ou du plancher supérieur. En variante, il est différent. Il comporte des fibres longues ou courtes, telles que par exemple des fibres de verre et/ou des fibres de carbone et/ou des fibres d'aramide et/ ou des fibres végétales. Ces fibres sont noyées dans une résine thermoplastique ou thermodure ou vitrimère, par exemple du polyamide, du polypropylène, du polyester ou de l'époxy. Le matériau composite de la coque présente une épaisseur comprise entre 1 mm et 6 mm et de préférence égale à 2 mm.

Afin de réduire la température du plancher et protéger ce dernier, la cavité comprend par exemple un revêtement interne d'isolant thermique. Il s'agit par exemple d'un traitement de surface spécifique, ou d'une pièce rapportée jouant le rôle d'isolant thermique.

Dans le cas où la cavité forme un résonateur, la cavité comprend en outre un organe de communication fluidique entre la cavité et la ligne d'échappement du véhicule automobile, par exemple un tube. De préférence, la cavité comporte un seul organe de communication fluidique, par exemple un seul tube. La cavité formant résonateur de Helmholtz permet d'absorber une partie de l'excitation acoustique provenant de la ligne d'échappement. Ce phénomène de résonance de Helmholtz favorise l'affaiblissement acoustique des bruits liés à la ligne d'échappement.

En outre, la conception du tube de liaison est telle qu'il n'y a pas de circulation permanente de gaz d'échappement depuis la ligne principale vers le résonateur.

L'échauffement du résonateur est donc limité.

L'organe de communication fluidique est en un métal, tel qu'un acier ou un aluminium. En variante, il est au moins partiellement en un matériau composite. Le matériau composite de l'organe de communication fluidique comporte des fibres longues ou courtes, telles que par exemple des fibres de verre et/ou des fibres de carbone et/ou des fibres d'aramide et/ ou des fibres végétales. Ces fibres sont noyées dans une résine thermoplastique ou thermodure ou vitrimère, par exemple du polyamide, du polypropylène, du polyester ou de l'époxy.

La ligne d'échappement étant mobile et la cavité formée par le plancher étant fixe, l'organe de communication fluidique comprend avantageusement un élément de découplage propre à atténuer les vibrations et les mouvements de la ligne d'échappement.

Selon une caractéristique avantageuse de l'invention, le plancher comporte en outre au moins un corps creux délimité par le plancher inférieur et le plancher supérieur. Il est alors avantageux de profiter de l'espace disponible dans le corps creux pour loger par exemple une couche d'insonorisant, permettant encore d'améliorer l'insonorisation du véhicule. En variante, le corps creux intègre d'autres éléments fonctionnels tels que des profilés de rigidification, des câbles, des gaines de ventilation, des inserts métalliques de renforcement d'ancrage, par exemple de siège.

Selon un second aspect, l'invention porte sur un véhicule automobile comprenant :
- un châssis ;
- un plancher selon l'une quelconque des revendications précédentes, rigidement fixé au châssis.

Le véhicule automobile est par exemple une voiture ou un utilitaire, ou un camion.

Le plancher est typiquement un plancher arrière, qui s'étend entre la planche à talon et la traverse arrière du véhicule. En variante, le plancher est un plancher avant, qui s'étend entre le tablier du véhicule et la planche à talon. En variante, le plancher s'étend entre le tablier du véhicule et la traverse arrière du véhicule. Le tablier est une cloison séparant le compartiment moteur du véhicule de l'habitacle. Le plancher est rigidement fixé non seulement aux longerons longitudinaux du véhicule, mais également potentiellement au tablier, à la traverse arrière et/ou à la planche à talon.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un véhicule automobile comportant un plancher selon un premier mode de réalisation de l'invention ;
- la figure 2 est une coupe longitudinale du plancher de la figure 1 ;
- la figure 3 est une coupe longitudinale d'un plancher selon un second mode de réalisation de l'invention ;
- la figure 4 est une coupe longitudinale de la cavité du plancher de la figure 3.

Dans la suite de la description, les directions longitudinale, transversale, verticale, l'avant et l'arrière seront définis en référence au sens de déplacement normal du véhicule automobile. La direction verticale est prise ici comme étant la perpendiculaire au plan de roulement du véhicule.

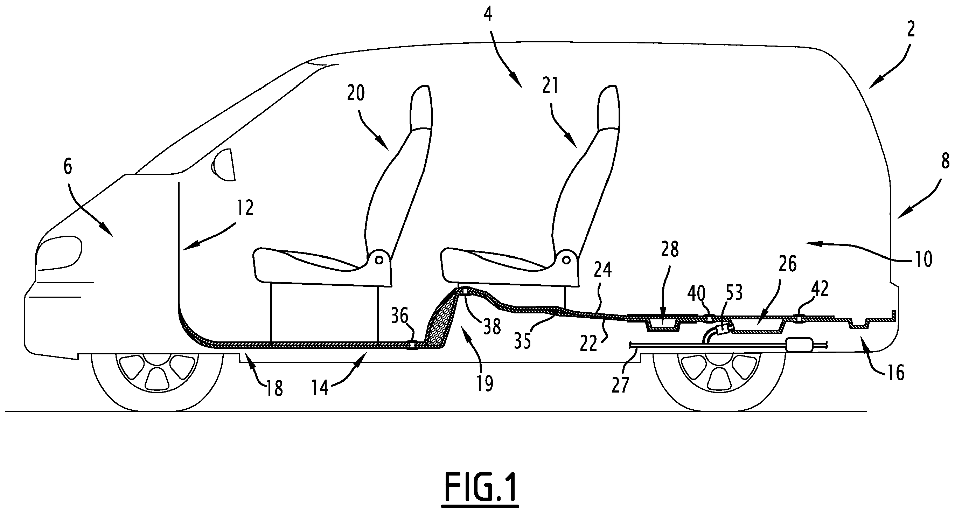

Le véhicule 2 représenté sur la figure 1 comprend une carrosserie délimitant dans le véhicule, un habitacle 4, un compartiment moteur 6 situé à l'avant de l'habitacle, et une traverse arrière 8 délimitant un coffre 10 situé à l'arrière de l'habitacle. Le compartiment moteur 6 est séparé de l'habitacle par un tablier 12. L'habitacle est délimité vers le bas par un plancher 14. Le plancher 14 comporte un plancher arrière 16, qui sera décrit par la suite, et un plancher avant 18. Le plancher arrière 16 et le plancher avant 18 sont liés entre eux dans une zone 19 située entre une traverse transversale classiquement appelée « planche à talon » et la traverse arrière de soutien des sièges. Cette zone de liaison est communément appelée « cave à pied de rang 2 ».

Le véhicule comporte encore des sièges 20, 21 rigidement fixés, directement ou indirectement, au plancher 14. Le plancher avant 18 est fixé à l'avant au tablier 12 et supporte les sièges 20 situés à l'avant du véhicule. Le plancher arrière 16 est fixé à l'arrière à la traverse arrière 8, et supporte les sièges 21 situés à l'arrière du véhicule, et le coffre 10.

Le plancher 14 du véhicule s'étend depuis le tablier 12 jusqu'à la traverse arrière 8 suivant une direction longitudinale du véhicule, et s'étend transversalement sensiblement sur toute la largeur du véhicule. Il est rigidement fixé latéralement sur le châssis (non représenté), plus précisément sur les longerons latéraux du véhicule 2.

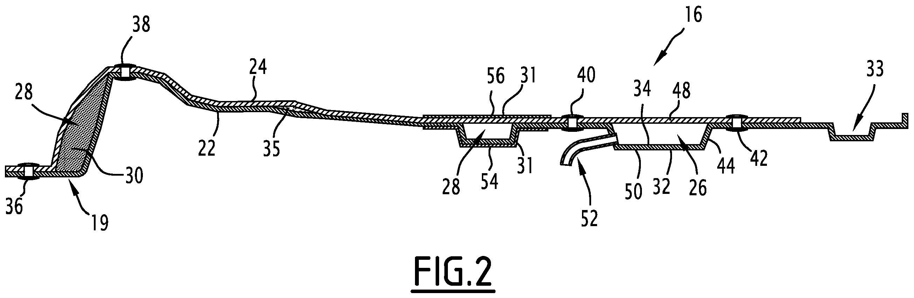

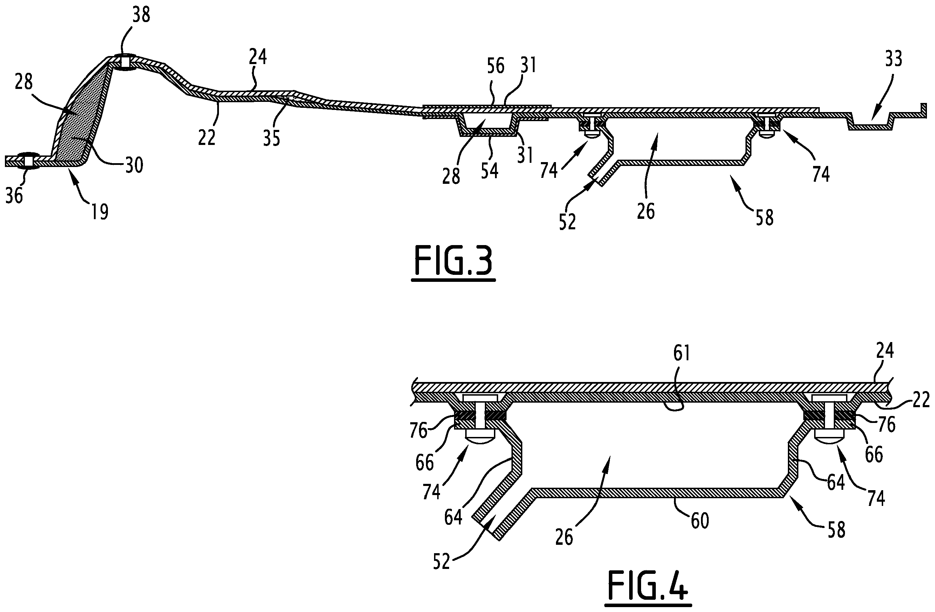

On a représenté sur les figures 2 et 3 le plancher arrière 16 du plancher 14 selon l'invention. Le plancher arrière 16 comprend :
- un plancher inférieur 22 en un matériau composite ;
- un plancher supérieur 24 en un matériau composite, s'étendant en regard d'au moins une partie du plancher inférieur 22 ;
- une cavité 26 communiquant avec la ligne d'échappement 27 du véhicule et délimitée au moins en partie par le plancher inférieur 22 ; et
- éventuellement un corps creux 28 comprenant une couche d'insonorisant 30 et/ou une couche de mousse structurelle 35.

Le plancher arrière 16 comprend en outre des renforts mécaniques 31, et éventuellement un logement 33 par exemple d'un kit de réparation ou d'une batterie (non représentés), délimité par le plancher inférieur 22.

Le plancher inférieur 22 comprend une face inférieure 32 et une face supérieure 34. La face supérieure 34 s'étend en regard du plancher supérieur 24, la face inférieure 32 est tournée vers la surface de roulement du véhicule. La face inférieure 32 définit une surface externe du véhicule, exposée à l'atmosphère.

Le plancher supérieur 24 s'étend longitudinalement sur une partie du plancher inférieur 22. Par exemple, le plancher supérieur 24 s'étend en regard de 60% de la surface du plancher inférieur 22.

Le plancher inférieur 22 et le plancher supérieur 24 sont assemblés l'un à l'autre par collage et/ou soudage et/ou tout autre moyen de fixation mécanique.

En variante, ou en plus de la couche de colle, les planchers inférieur et supérieur 22, 24 sont rigidement fixés l'un à l'autre par une pluralité d'organes de fixation 36, 38, 40, 42 tels que des rivets auto perçants comme représenté sur la figure 2, et/ou par une ligne de soudage continue ou discontinue. Les organes de fixation 36, 38, 40, 42 sont régulièrement répartis le long du plancher arrière 16. Seuls quatre organes de fixation 36, 38, 40, 42 sont représentés sur la figure 2, mais en variante, le plancher arrière 16 comprend d'autres organes de fixation non représentés.

La cavité 26 est délimitée par le plancher inférieur 22 et le plancher supérieur 24. Plus précisément, la cavité 26 est délimitée par une paroi périphérique 44, une paroi supérieure 48 et une paroi de fond 50. La paroi périphérique 44 et la paroi de fond 50 sont formées dans le plancher inférieur 22. La paroi supérieure 48 est formée dans le plancher supérieur 24. Avantageusement, des organes de fixation, par exemple deux organes de fixation 40, 42 sont répartis autour de la cavité 26 de façon à maintenir rigidement fixés les planchers inférieur 22 et supérieur 24 à proximité de la cavité 26. Un joint (non représenté) est interposé entre les planchers inférieur 22 et supérieur 24 autour de la cavité 26 pour créer une étanchéité.

La cavité 26 comprend un unique tube de communication 52. Dans l'exemple représenté sur les figures, le tube de communication 52 s'étend sensiblement dans le plan formé par les directions verticale et longitudinale. Le tube 52 est rapporté sur la cavité 26 et est collé ou soudé par exemple à la paroi de fond 50 et à la paroi périphérique 44. En variante, le tube 52 est venu de matière avec la paroi de fond 50 et la paroi périphérique 44. Il relie la cavité 26 à la ligne d'échappement 27 du véhicule. Le tube comprend avantageusement un élément de découplage 53 visible sur la figure 1. L'élément de découplage 53 permet d'atténuer les vibrations et les mouvements de la ligne d'échappement 27.

Le corps creux 28 est délimité par le plancher inférieur 22 et par le plancher supérieur 24. Le corps creux 28 comprend par exemple une couche d'insonorisant 30. La couche d'insonorisant occupe entièrement le volume intérieur du corps creux 28. En variante, la couche d'insonorisant 30 occupe seulement en partie le volume intérieur du corps creux 28.

En variante, le corps creux 28 comprend une mousse semi-structurelle ou structurelle 35, telle qu'une mousse en polyamide (PA), en polyéthylène téréphtalate (PET), en polypropylène expansé (EPP), ou en polymethacrylimide (PMI).

Les renforts mécaniques 31 s'étendent le long des planchers inférieur et supérieur 22, 24. Par exemple et comme visible sur la figure 2, un premier renfort mécanique 54 comporte une première plaque de renfort 54 qui s'étend le long d'une partie du plancher inférieur 22 et qui épouse la forme de celui-ci. La première plaque de renfort 54 présente par exemple une forme en Ω. La première plaque de renfort 54 est par exemple collée, ou soudée sous le plancher inférieur 22. En variante (non représentée), le premier renfort mécanique 54 est intégré dans le plancher inférieur 22 et est formé par une surépaisseur du plancher inférieur 22.

Comme représenté sur la figure 2, un deuxième renfort mécanique 56 comporte une deuxième plaque de renfort 56 qui s'étend le long d'une partie du plancher supérieur 24 et qui épouse la forme de celui-ci. La deuxième plaque de renfort 56 est par exemple collée, ou soudée au plancher supérieur 24. En variante (non représentée), le deuxième renfort mécanique 56 est intégré dans le plancher inférieur 24 et est formé par une surépaisseur du plancher inférieur 22.

Les premier et deuxième renforts mécaniques 54, 56 s'étendent en regard l'un de l'autre par exemple autour des parties des planchers inférieur 22 et supérieur 24 délimitant le corps creux 28. La première plaque de renfort 54 s'étend le long du plancher inférieur 22, et la deuxième plaque de renfort 56 s'étend le long du plancher supérieur 24, en regard de la première plaque de renfort 54. Seuls deux renforts mécaniques 31 sont représentés sur la figure 2, mais en variante, le plancher arrière 16 comprend d'autres renforts mécaniques non représentés.

Un second mode de réalisation va maintenant être décrit, en référence aux figures 3 et 4. Seuls les points par lesquels le second mode de réalisation de l'invention diffère du premier seront détaillés ci-dessous. Les éléments identiques, ou assurant la même fonction, seront désignés par les mêmes références dans les deux modes de réalisation.

Dans le second mode de réalisation, la cavité 26 est formée par le plancher inférieur 22 et par une coque 58.

La coque 58 est fixée sur la face inférieure 32 du plancher inférieur 22. La coque 58 présente une forme de coupelle ouverte vers le la face inférieure 32 du plancher inférieur 22. La coque 58 comporte une cloison de fond 60, une cloison supérieure 61 formée par le plancher inférieur 22, et une cloison latérale 64. La cloison de fond 60 et la cloison latérale 64 sont formées par la coque 58. La cloison de fond 60 s'étend sensiblement parallèlement et à distance de la cloison supérieure 61 formée par le plancher inférieur 24. La coque 58 comprend en outre une collerette externe 66 qui prolonge radialement la cloison latérale 64 vers l'extérieur de la coque 58. La collerette externe 66 s'étend suivant une direction parallèle à la cloison de fond 60.

La collerette est rigidement fixée au plancher inférieur 22. Elle est fixée au plancher inférieur 22 par l'intermédiaire d'une ou plusieurs pièce(s) de fixation(s) mécanique(s) amovible(s) 74, par exemple par l'intermédiaire d'un ensemble vis-écrou 74 et éventuellement d'un joint 76, comme représenté sur la figure 3.

Dans une variante du second mode de réalisation (non représentée), la cavité 26 est formée par le plancher supérieur 24 et la coque 58.

## Revendications

1. Plancher (14) de véhicule automobile (2), du type comprenant :
- un plancher inférieur (22) en un matériau composite ; et
- un plancher supérieur (24) en un matériau composite, s'étendant en regard d'au moins une partie du plancher inférieur (22), les planchers inférieur (22) et supérieur (24) étant liés l'un à l'autre,
**caractérisé en ce que** le plancher (14) comprend au moins une cavité (26) délimitée au moins en partie par le plancher inférieur (22) ou supérieur (24) et communiquant avec la ligne d'échappement (27) du véhicule automobile (2).

2. Plancher (14) selon la revendication 1, **caractérisé en ce que** la cavité (26) est une cavité (26) formant résonateur.

3. Plancher (14) selon la revendication 1 ou 2, **caractérisé en ce qu'**il comprend en outre au moins un corps creux (28) délimité par le plancher inférieur (22) et le plancher supérieur (24).

4. Plancher (14) selon la revendication 3, **caractérisé en ce que** le ou au moins un des corps creux (28) comprend une couche d'insonorisant (30) et/ou une mousse semi-structurelle ou structurelle (35).

5. Plancher (14) selon l'une quelconque des revendications précédentes, **caractérisé en ce que** la cavité (26) est délimitée par le plancher inférieur (22) et le plancher supérieur (24).

6. Plancher (14) selon l'une quelconque des revendications 1 à 4, **caractérisé en ce que** le plancher (14) comprend une coque (58), le plancher inférieur (22) comprenant une face inférieure (32) et une face supérieure (34), la face supérieure (34) s'étendant en regard du plancher supérieur (24), la coque (58) étant fixée sur la face inférieure (22), la cavité (26) étant délimitée par le plancher inférieur (22) et par la coque (58).

7. Plancher (14) selon la revendication 6, **caractérisé en ce que** la coque (58) est fixée au plancher inférieur (22) par une ou plusieurs pièce(s) de fixation(s) mécanique(s) amovible(s) (74).

8. Plancher (14) selon l'une quelconque des revendications 6 et 7, **caractérisé en ce que** la coque (58) est en un métal ou en un matériau composite.

9. Plancher (14) selon l'une quelconque des revendications précédentes, **caractérisé en ce que** la cavité (26) comprend un organe de communication fluidique (52) entre la cavité (26) et la ligne d'échappement (27) du véhicule automobile (2).

10. Plancher (14) selon l'une quelconque des revendications précédentes, **caractérisé en ce que** le plancher inférieur (22) et le plancher supérieur (24) sont collés, soudés ou assemblés l'un à l'autre par un ou plusieurs organe(s) de fixation (36, 38, 40, 42).

11. Véhicule automobile (2) comprenant :
- un châssis ;
- un plancher (14) selon l'une quelconque des revendications précédentes, rigidement fixé au châssis.

## Patentansprüche

1. Boden (14) eines Kraftfahrzeugs (2), umfassend:
einen unteren Boden (22) aus einem Verbundmaterial; und
einen oberen Boden (24) aus einem Verbundmaterial, welcher sich über zumindest einen Teil des unteren Bodens (22) erstreckt, wobei der untere Boden (22) und der obere Boden (24) miteinander verbunden sind,
**dadurch gekennzeichnet, dass** der Boden (14) zumindest einen Hohlraum (26) aufweist, der zumindest teilweise durch den unteren Boden (22) oder den oberen Boden (24) begrenzt ist und in Verbindung mit der Auspuffleitung (27) des Kraftfahrzeugs steht.

2. Boden (14) nach Anspruch 1, **dadurch gekennzeichnet, dass** der Hohlraum (26) ein Hohlraum (26) ist, der einen Resonator bildet.

3. Boden (14) nach Anspruch 1 oder 2, **dadurch gekennzeichnet, dass** dieser weiter wenigstens einen Hohlkörper (28) aufweist, welcher durch den unteren Boden (22) und den oberen Boden (24) begrenzt ist.

4. Boden (14) nach Anspruch 3, **dadurch gekennzeichnet, dass** der oder zumindest einer der Hohlkörper (28) eine Schallisolationsschicht (30) und/oder einen strukturellen oder semistrukturellen Schaum (35) aufweist.

5. Boden (14) nach einem der vorstehenden Ansprüche, **dadurch gekennzeichnet, dass** der Hohlraum (26) durch den unteren Boden (22) und den oberen Boden (24) begrenzt ist.

6. Boden (14) nach einem der Ansprüche 1 bis 4, **dadurch gekennzeichnet, dass** der Boden (14) eine Schale (58) aufweist, wobei der untere Boden (22) eine untere Seite (32) und eine obere Seite (34) aufweist, wobei die obere Seite (34) sich mit Bezug auf den oberen Boden (24) erstreckt, wobei die Schale (58) an der unteren Seite (22) befestigt ist, wobei der Hohlraum (26) durch den unteren Boden (22) und durch die Schale (58) begrenzt ist.

7. Boden (14) nach Anspruch 6, **dadurch gekennzeichnet, dass** die Schale (58) mittels einem oder mehreren lösbaren mechanischen Befestigungsmittel(n) (74) an den unteren Boden (22) befestigt ist.

8. Boden (14) nach einem der Ansprüche 6 und 7, **dadurch gekennzeichnet, dass** die Schale (58) aus einem Metall oder einem Verbundwerkstoff besteht.

9. Boden (14) nach einem der vorstehenden Ansprüche, **dadurch gekennzeichnet, dass** der Hohlraum (26) eine Einrichtung (52) zur fluiden Verbindung zwischen dem Hohlraum (26) und der Auspuffleitung (27) des Kraftfahrzeugs (2) aufweist.

10. Boden (14) nach einem der vorstehenden Ansprüche, **dadurch gekennzeichnet, dass** der untere Boden (22) und der obere Boden (24) miteinander verklebt, verschweißt oder mittels einem oder mehreren Befestigungsmittel(n) (36, 38, 40, 42) befestigt sind.

11. Kraftfahrzeug (2), umfassend:
- einen Rahmen;
- einen Boden (14) nach einem der vorstehenden Ansprüche, welcher starr an dem Rahmen befestigt ist.

## Claims

1. Floor (14) of motor vehicle (2), of the type comprising:
- a lower floor (22) made from a composite material; and
- an upper floor (24) made from a composite material, extending opposite at least part of the lower floor (22), the lower (22) and upper (24) floors being connected to one another,
**characterized in that** the floor (14) comprises at least one cavity (26) at least partially delimited by the lower (22) floor or by the upper (24) floor and communicating with the exhaust line (27) of the motor vehicle (2).

2. Floor (14) according to claim 1, **characterized in that** the cavity (26) is a cavity (26) forming a resonator.

3. Floor (14) according to claim 1 or 2, **characterized in that** it further comprises at least one hollow body (28) delimited by the lower floor (22) and the upper floor (24).

4. Floor (14) according to claim 3, **characterized in that** the at least one hollow body (28) comprises a soundproofing layer (30) and/or a semi-structural or structural foam (35).

5. Floor (14) according to any one of the preceding claims, **characterized in that** the cavity (26) is delimited by the lower floor (22) and the upper floor (24).

6. Floor (14) according to any one of claims 1 to 4, **characterized in that** the floor (14) comprises a shell (58), the lower floor (22) comprising a lower face (32) and an upper face (34), the upper face (34) extending opposite the upper floor (24), the shell (58) being fastened on the lower face (22), the cavity (26) being delimited by the lower floor (22) and the shell (58)

7. The floor (14) according to claim 6, **characterized in that** the shell (58) is fastened to the lower floor (22) by one or several removable mechanical fastening part(s) (74).

8. Floor (14) according to any one of claims 6 to 7, **characterized in that** the shell (58) is made from a metal or a composite material.

9. Floor (14) according to any one of the preceding claims, **characterized in that** the cavity (26) comprises a fluidic communication member (52) between the cavity (26) and the exhaust line (27) of the motor vehicle (2).

10. Floor (14) according to any one of the preceding claims, **characterized in that** the lower floor (22) and the upper floor (24) are glued, welded or assembled to one another by one or more fastening member(s) (36, 38, 40, 42).

11. Motor vehicle (2), comprising:
- a chassis;
- a floor (14) according to any one of the preceding claims, rigidly fastened to the chassis.
